# EUROPEAN PATENT APPLICATION

(11) **EP 1 197 475 A1**
(43) Date of publication of application: **17.04.2002**
(21) Application number: 99951289.0
(22) Date of filing: 15.10.1999
(51) Int. Cl.: C03B 19/09

(54) **METHOD FOR PRODUCING CLADDING AND DECORATIVE TILES FROM BROKEN GLASS AND MODULAR PLANT FOR THE SERIAL PRODUCTION THEREOF**

(30) Priority: 26.05.1999 RU 99110304
(71) Applicant: Nikitin, Alexandr Ivanovich, Moscow, 107143 (RU); Teplyakov, Alexandr Mikhailovich, Moscow, 127474 (RU)
(72) Inventor: Nikitin, Alexandr Ivanovich, Moscow, 107143 (RU); Teplyakov, Alexandr Mikhailovich, Moscow, 127474 (RU)
(74) Representative: HOFFMANN - EITLE
(86) International application number: RU9900385
(87) International publication number: WO0073222

(57) **Abstract**

The invention is related to manufacturing of the material of glass-silica type, based on glass-breakage, used for outer and inner finishing of buildings and constructions, floors, for manufacturing of artistic-decorative panels. The technical effect is in rising the articles quality, productivity and economy. The peculiarity of the method of decorative-facing slabs manufacturing is that in a primary closed heat volume a blank is subjected to influence of heat not only from a heater placed above, but directly by a gas-air flux from accumulated heat of earlier melted blank from below, for which purpose the bottom of the thermal mould is executed as heat-gas permeable. In the modular installation for mass line production of decorative-facing slabs the thermal cowl is placed with possibility of lifting thereof over the frame, where a device is mounted for thermal moulds handing to the thermal cowl. Each thermal mould has a lower heat-insulating cap. A bottom of the thermal mould is made from a gas permeable porous or small-meshed material.

## Description

### Field of the invention

The invention relates to a mass line production of facing slabs from the material of glass silica type, based on a granule-powder glass-breakage blend, used for outer and inner finishing of buildings and constructions.

### Background art

It is known a method for manufacturing decorative-facing slabs, comprising laying of slabs blank granule-powder components into moulds with further thermal treatment by heating, caking, melting blank face surfaces and annealing thereof (RU 2083513, 1997). By this method a heater is introduced between an upper and lower moulds, and a surface of one blank is melted in the lower mould and the second blank placed in the upper mould is simultaneously heated by heating the mould bottom. Then the upper mould is lowered onto the mould with the melted blank and is heated from top by the heater. Thus the following takes place: thermal energy of the heater is spent both for melting of the lower blank and for heating of the upper blank cold bottom, that lowers effectiveness of the heater thermal flux. The heat of the molten blank is also thus used ineffectively. It is screened by the mould bottom, spent, first of all, for heating of the whole mould and only after that for heating of the blank lower layers. Hence the heat transfer from one blank to another is restricted by the components drying mode.

It is known a method for mass line production of facing slabs from granule-powder glass-breakage blend, comprising laying of the components onto a bottom of a thermal mould, placing the latter in turn into a primary closed volume under a heater, melting the blank, introducing a next blank under the heater and cooling the melted blank outside the primary closed heating volume (RU 2004507, 1997). Deficiency of the known method for facing slabs productions is its comparatively low productivity, low economy and low quality of material because of one-side heating of the blank. While the face side of the blank is molten, its back side is at the stage of caking because of the low thermal conductivity of the glass-breakage. This lowers the strength of the article. By increasing the temperature or duration of the thermal treatment the upper molten decorative part of the blank flows into the lower layers. Thus the components of the material base emerge to the surface of the article and spoil it.

It is known an installation for continuous manufacturing of decorative-facing slabs, based on the glass-granulate, comprising a frame with a base and a thermal cowl mounted on the frame, thermal moulds with upper thermal-insulating caps, a carriage with supports for transporting the thermal moulds under the thermal cowl, devices for thermal moulds clamping and hanging to the thermal cowl (RU 2121462, 1998). The deficiency of the known installation is in that providing the heat transfer from one blank to another in embodying of the method would necessitate the use of a device for clamping the thermal moulds to the thermal cowl during whole time of contact of the thermal moulds one with another. In this case said device would firstly close the shortest way for the carriage for transporting the thermal moulds to other installations being integral production line with the first one. And secondly it would be necessary to provide individual devices for each thermal cowl of adjacent installations, that would make the production line more complicated. Besides, implementation of the thermal mould with a heat insulating bottom prevents the heat transfer from the molten blank to the cold one.

### Disclosure of the invention

A object of the present invention is improvement of quality of the material, manufacture productivity and economy. This technical result is achieved by that in the method comprising facing slabs manufacturing, based on granule-powder glass-breakage, comprising laying blank components onto a bottom of thermal moulds, placing the thermal moulds in turn in a closed heating volume under a heater, melting the first blank, introduction the next blank under a heater and cooling the melted blank outside said heating volume, the granule-powder components of the blank in the primary closed heating volume are subjected from below to influence of gas-air flux of the heat accumulated by the melted blank, thus a gas-permeable porous or small-meshed material is used as a bottom of the thermal mould. The above-mentioned embodiment of the method for facing slabs manufacturing considerably accelerates the process of thermal treatment of the blank without additional energy consumption. Thus the active heat flux of the melted blank instantly passes through the cell or porous bottom of the blank mould, for example, a heat-resistant grid, dries the granule-powder blend and burns out all admixtures got into the material with the glass-breakage. The burning of admixtures is followed by active release of gas and finishes before the blank surface is melted, thus no vitrification of gas bubbles takes place on the decorative surface of the article preventing the corresponding type of spoilage. Besides, acceleration of melting the glass-mass in the lower part of the blank promotes increase of specific weight of the lower layers components of the blank because of the flux passing through the porous bottom of the thermal mould, and these components do not penetrate to the surface of the article.

The technical result is achieved also by that in the modular installation for mass line production of decorative-facing slabs, based on the granule-powdered glass-breakage, comprising a frame with a base and a thermal cowl mounted on the frame, thermal moulds with upper heat-insulating caps, a carriage with supports for transporting the thermal moulds in turn under the thermal cowl, devices for clamping and a hanging the thermal moulds to the thermal cowl, which is mounted with possibility of lifting over a frame, the hanging device for handing the thermal moulds to the thermal cowl is mounted on the frame, each thermal mould has a lower heat-insulating cap, and a bottom of the thermal moulds is formed from a gas permeable porous or small-meshed material.

Implementation of the installation allows to use it as a module for construction of high productive lines. Thus it provides the possibility of using in such lines a common device for clamping a thermal mould to the thermal cowl, as well as the carriage. Therefore, the productive lines using the invention are more cost effective.

### Brief description of the drawings

The invention will be further explained by the drawings, on which:
Fig. 1 shows the primary closed heat volume, formed by the thermal cowl cavity, the heat-insulated contours of thermal moulds and the lower heat-insulating cap.
Fig. 2 shows exit of a thermal mould with dried blank components from the primary closed heat volume.
Fig. 3 shows introducing thermal moulds with dried components to the space between the thermal cowl and a thermal mould with a melted blank.
Fig. 4 shows a new formed heat volume where melting of a preliminary dried blank is performed in a heat blow mode.
Fig 5 shows forming of the secondary closed heat volume by detaching the lower thermal mould and the heat-insulating cap from the thermal cowl with use of the upper and an additional lower heat-insulating caps.
Fig. 6 shows the primary closed heat volume in drying mode of the blank components of the lower thermal mould by heat from the upper one.
Fig. 7 shows the secondary closed heat volume for cooling the article formed as a result of a actions according Fig. 5.
Fig. 8 shows a stack of thermal moulds with cooling articles, with an individual secondary closed heat volume formed for them.
Fig. 9 shows the modular installation, front view from the side of operator workplace.
Fig. 10 shows the same, side view.
Fig. 11 shows the carriage with a thermal mould and a blank, plan view.
Fig. 12 shows the processing line comprising two modular installations having a stack-assembler and a stack-disassembler.

### Best embodiment of the invention

The method for decorative-facing slabs manufacturing based on a granule-powder glass-breakage, is carried out in the following way.

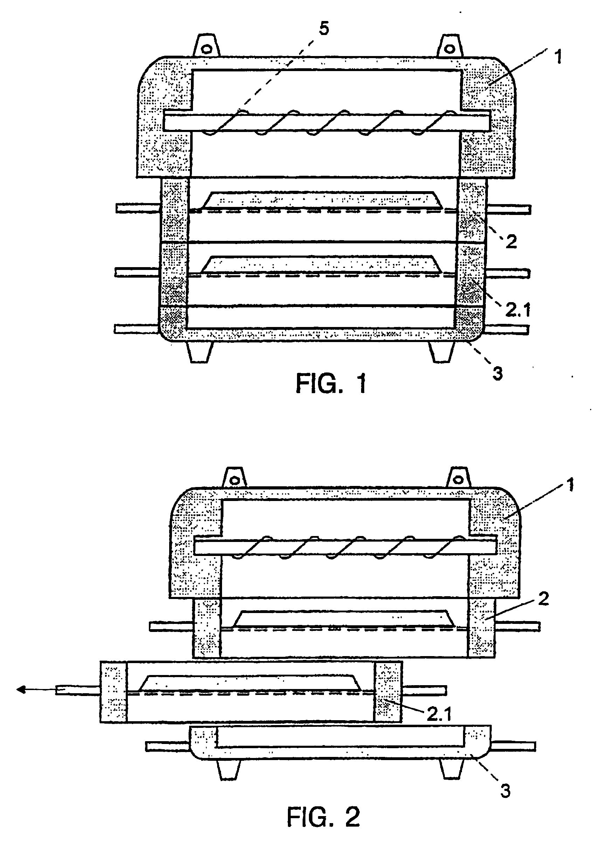

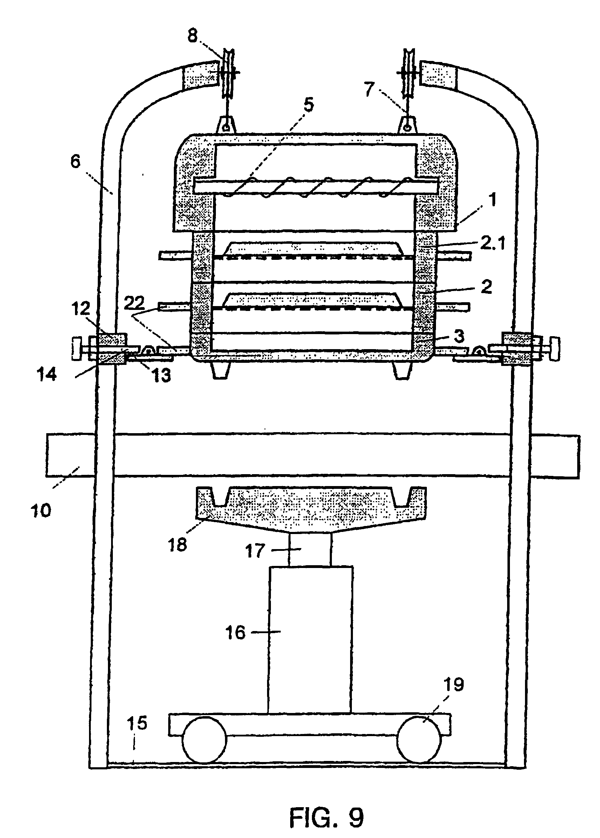

Initial components for decorative-facing slabs are: crushed glass-breakage having granules size up to 3 mm, quarts sand with particles size up to 1 mm, colored glass-breakage or dyestuff. At the section of thermal moulds charging with the blanks a thermal mould is prepared to the work. A thermal mould is installed on the carriage of in turn transportation of the thermal moulds to the thermal cowl and moved under a rule of a sand smoother, adjusted onto a certain height relative to the carriage guides. A layer of clean river sand having thickness 3-5 mm, with granules, exceeding by size the grid cell is piled in the grid bottom of the thermal mould. The sand is preliminarily washed and screened, for screening out the pulverulent fraction. Sand on the mould bottom is necessary first of all for giving roughness to the back surface of the manufactured article. The sand layer on the mould bottom is leveled by a mechanical rule removing all surface irregularities and skews of the thermal mould bottom, obtained by its manufacturing and exploitation. Then the thermal mould with the carriage is placed under a layerwise collator of the blend, and a constructive blank layer is stowed in consecutive order, consisting of 20% of quarts sand and 80% of transparent glass-breakage and having height of 6-8 mm, and laying a decorative layer of blend comprising a colored glass or uncolored glass with addition of dye-stuff. The thermal mould with a ready-made blank is transported in the starting position at the thermal cowl of the modular installation. A primary closed heat volume is completed, in which the blank will be melt. It is formed from a heat-insulated contour of the thermal cowl cavity, a thermal mould, a heat-insulating cap, clamped successively one to another. Two thermal moulds primarily put one on another are transported under the thermal cowl with help of a carriage with blanks and a heat-insulating cap, then they are attached to the thermal cowl forming said heat volume (See Figs. 1,9, positions 1.2, 2.1, 3)

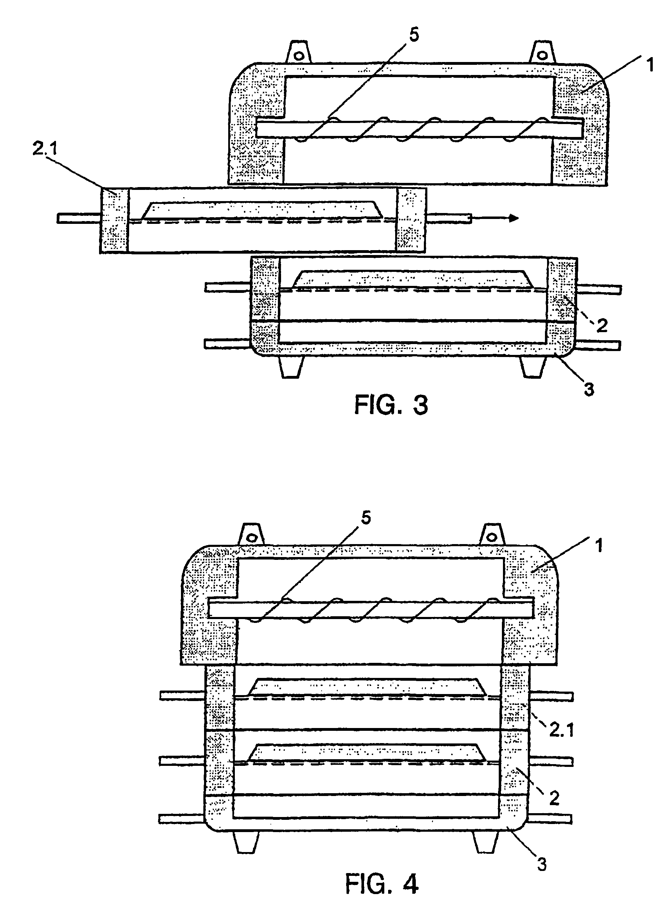

In such a way the above-mentioned heat volumes are consecutively formed at all modular installations, comprising the production line of the mass line manufacturing of decorative-facing slabs, connected by mutual guides with carriages and a common device for thermal moulds clamping to the thermal cowl. The temperature in the thermal cowl is raised to 960°C, that is sufficient for bottle glass-breakage melting, this breakage being part of the blank contents; said temperature is held until full blank melting (the primary total time makes up 20-25 minutes with article thickness of 5-6 mm). This finishes the primary preparing work for thermal cowl bringing the installation to the continuous working mode during a shift. Then the elements forming a primary closed heat volume are disconnected by the carriage and the device for thermal moulds clamping to the thermal cowl. From thermal cowl 1 and upper thermal mould 2, in which a blank is melted, lower thermal mould 2.1 is lowered with heat-insulating cap 3, thermal mould 2.1 (see Fig. 2) with dried components is withdrawn by the carriage out of the thermal cowl, lower heat-insulating cap 3 is connected to thermal mould 2 and they are lowered relatively to thermal cowl 1, forming thus a space slightly higher, than the height of a thermal mould. Then thermal mould 2.1 is introduced in this space (see Fig. 3), and elements of the primary heat closed volume are connected again in the order according to Fig. 4. Thus thermal mould 2.1 with a dry blank is placed directly under the thermal cowl, thermal mould 2 with a melted blank and thermal cap 3 are placed under it. A dry blank is heated to the temperature of heat carriers in the heat shock mode by lower 9 and upper heat fluxes, emanating from the heated body and the electric heater. Thus the temperature of heat-carriers sinks, its upper limit at the electric heater is restricted by the heat apparatus to 920°C, i.e. lower, than the temperature of surface melting, for finishing of gas release from the granule-powdered components earlier, than melting of the blank surface. This temperature is held during 5 minutes. Then the temperature restriction is removed and in the next few minutes the blank temperature achieves a predetermined level, and the blank is melted. Thus the time for blank melting operation shortens approximately twice comparatively to the one-side blank melting according to the known method. After this the thermal processing of the blank is finished. The next task is transportation of the lower blank, that gave a part or its heat to the upper blank, from the primary closed volume to the secondary one for cooling thereof.

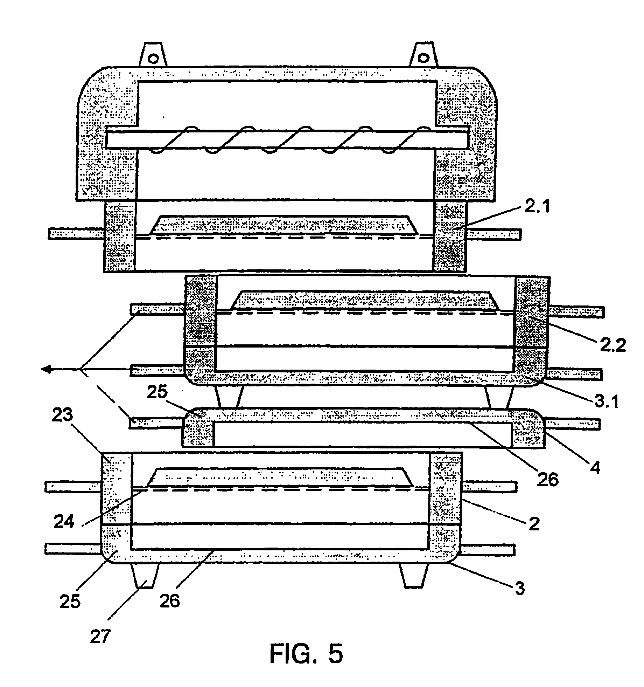

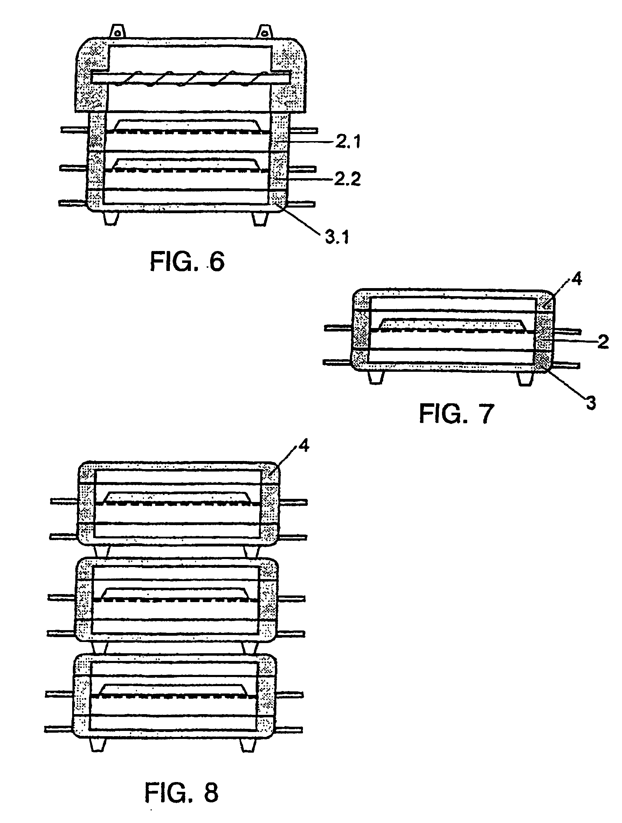

Implementation of this task is shown on Fig. 5. A stake of upper, lower heat-insulating caps 3.1 placed one over another, in the succession from bottom upwards, and a next in turn thermal mould 2.2 with a blank comprising humid components is transported in the starting position at the thermal cowl. The primary closed heat volume is disconnected as shown on Fig. 5. Thus thermal mould 2 with a blank, that partly gave its heat, is detached from thermal cowl 1 and thermal mould 2.1, and said stake is introduced into this space. Then a contact of all elements participating in forming of the heat volumes is executed by up-down moving of the device for thermal moulds clamping. In result of this movement closed heat volumes are formed under the thermal cowl: a primary volume with two blanks (Fig. 6) and a secondary one with an article being cooled (Fig. 7), lowered onto the carriage and then transported thereby for stacking according to Fig. 8 with a height of the stack, determined by permitted limits. Then the stack is transported to an articles cooling section where it is cooled during 3 hours. Extracted articles have a smooth polished or mat surface on one side and a rough surface on another side for reliable fixation thereof on buildings concrete or brick surfaces.

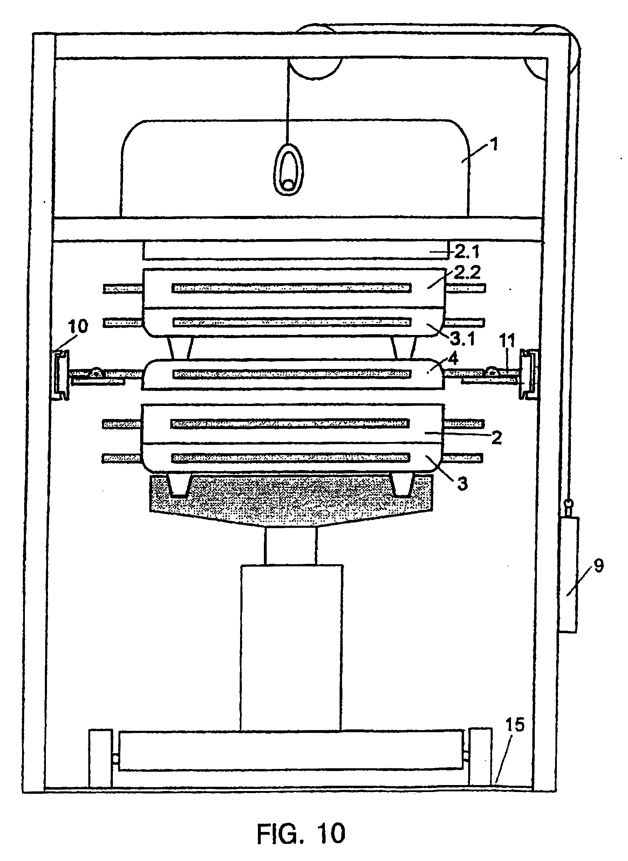

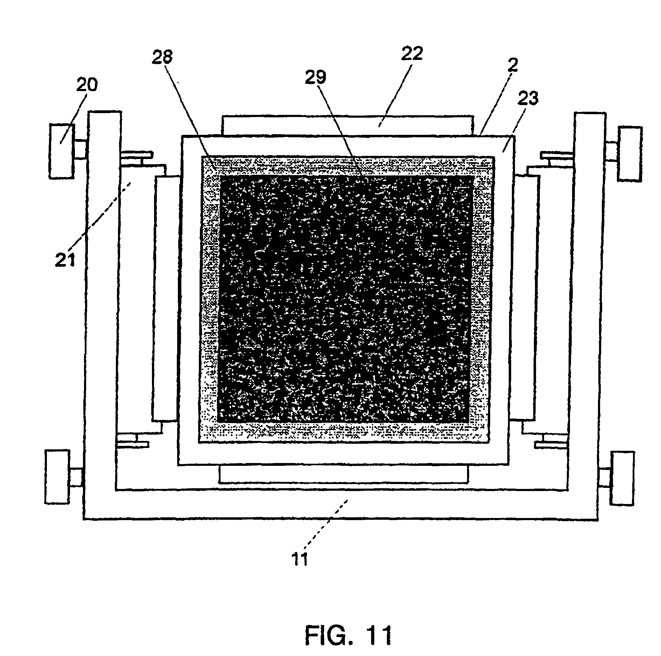

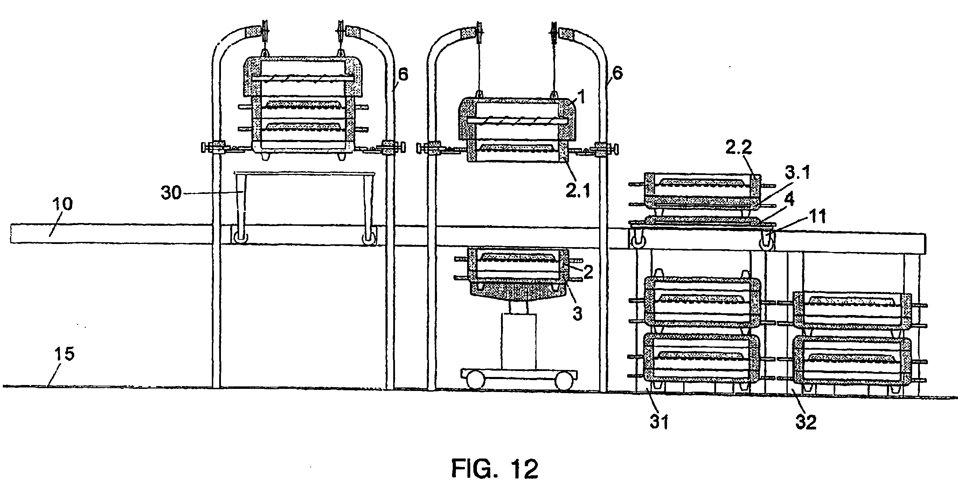

The modular installation for mass line manufacturing of decorative-facing slabs comprises thermal cowl 1 (see Figs. 9, 10) with sets of thermal moulds 2 including lower heat-insulating cap 3, upper heat-insulating cap 4 (Fig. 7) and heater 5. Thermal cowl 1 is placed on frame 6 with possibility of lifting by rope 7, pulleys 8 and a counterbalance 9. Guides 10 are mounted on the frame, in which a carriage 11 is mounted for transportation of thermal moulds with blanks under thermal cowl 1, and support frame 12 with a device for thermal moulds handing to the thermal cowl mounted in it. The latter is formed as rotating plates 13 and slide-valves 14. The device of thermal moulds clamping to the thermal cowl is mounted on the base of frame 6 formed as cylinder 16 with rod 17, platform 18 and wheels 19 (a drive is not shown). Carriage body 11 has U-form configuration (see Fig. 11), it is provided with wheels 20, rotating supports 21 under side lugs 22 of thermal mould and heat-insulating caps. Side lugs 22 are provided at all butts of the thermal moulds and heat-insulating caps. Rotating supports 21 allow to lay said elements on the carriage both from above, and from below. A heat-insulating contour 23 from material MKRV-200 is placed in a metal shell of thermal mould 2 (Fig.5), its bottom is executed from small-meshed heat-resistant grid 24. Metal shells of heat-insolating caps 3 have a heat-protecting layer of said material, position 25, and a screen of heat-resistant steel. Horizontal planes of shells of lower heat-insulating caps 3 have centering support lugs 27. In thermal mould 2 sand layer 28 and granule-powder blend comprising blank 29 are laid onto grid bottom 24 (see Fig. 11). The modular installation is executed both for work in individual mode, and in mode of processing line (Fig. 12) arranged of a row of similar installations, frames 6 of which are connected by mutual guides 10 and placed on common base 15. Thus a number of modular installation may be provided with common carriages 11 for transportation the thermal moulds under thermal cowl 30 and for operation on the thermal moulds place exchange in the primary closed heat volume, and exchange of the thermal moulds sets and the device of thermal moulds clamping moving under them. Carriage 30 is formed similarly to carriage 11 and differs from it only by the body height, designed to allow its passing under thermal cowl 1 (thermal cowls of the line) with a thermal mould on it with minimal clearance. The technologic line is provided with stack-assembler 31 and stack-disassembler 32 with electro-mechanical lifts for thermal moulds and stacks, formed from them.

The modular installation works in a following way. At the beginning it is brought to the working mode. For this purpose a primary closed heat volume is formed, consisting of a thermal cowl cavity, thermal moulds 21, 2 connected to the thermal cowl and a heat-insulating cap (see Figs. 9, 12). Thus carriage 11 and a device for clamping thermal moulds to the thermal cowl are activated. Carriage 11 with thermal moulds and blanks 29, consisting of granule-powder glass-breakage blend and sand, is transported along guides 10 under the thermal cowl of the installation. The device for thermal moulds clamping to a thermal cowl 1 placed on ropes 7 with help of pulleys 8 and frame 6 is switched on. In result of the further movement of platform 18 upwards the thermal cowl is raised over frame 12 together with thermal moulds and heat-insulating cap 3, side lugs 22 of which, passing rotating plates 13 of the device for handing thermal moulds to a thermal cowl, will bee stopped over them. Then platform 18 is lowered and all elements of the formed heat volume by side lugs of heat-insulating cap 3 hang on rotating plates 13 being clamped by weight of thermal cowl 1, adjusted by counterbalance 9. The released carriage is led apart to a stack-disassembler, by help of which a stack of elements is laid on the carriage rotating supports, comprising (in upward order): heat-insulating cap 4 (lower), upper cap 3.1, thermal mould 2.2. Then the carriage with the above-mentioned contents is returned back to the original position near the installation. After forming and placing the heat volume on rotating plates 13 of frame 12 belonging to frame 6, heater 5 of thermal cowl 1 is switched on and temperature in the primary closed heat volume is raised to the predetermined level of 960°C, that is sufficient for melting of the glass-breakage in the blank components. During the temperature rise in relatively slow mode of beinging the thermal cowl to the operating mode (30 - 40 min), the drying of the upper blank components with gas release from their mass is executed. When the upper blank surface begins to melt, the lower blank just enters into the mode of active drying, beginning receiving the heat from the hot bottom of the upper thermal mould. After finishing the blank melting in upper thermal mould 2.1, a place exchange of thermal moulds is executed under thermal cowl 1. For this purpose platform 18 of the device for thermal moulds clamping to thermal cowl 1 rises a lower heat-insulating cap 3 above rotating plates 13. Holders 14 release said plates and they pass side lugs 22 of heat-insulating cap 3 and thermal moulds 2 at back moving of platform 18. After the above-mentioned elements of the heat volume lowered together with platform 18 will pass rotating plates 13, holders 14 will come in contact with said elements, and in result of this thermal mould 2.1 by its side lugs will lower onto rotating plates 13. The platform 18 will be stopped after forming a small slot between thermal moulds 2 and 2.1. Then carriage 30 is introduced along guides 10 and the carriage will be placed by its rotating supports 21 under side lugs 22 of lower thermal mould 2. Then, after further lowering the platform, the lower thermal mould will be lowered onto carriage 30 and the latter will be transported apart from the installation. The platform will be again moved up-down together with heat-insulating cap 3 placed on it. In result of this movement and above-mentioned interaction of the elements between the thermal cowl and the upper thermal mould, placed on the heat-insolating cap of platform 18, a space is formed, that is sufficient for introduction of carriage 30 with thermal mould 2, comprising a dry blank. The carriage 30 is introduced under the thermal cowl and thermal mould 2 is placed over thermal mould 2.1, comprising a melted blank. By moving platform 18 up, the butt surfaces of thermal cowl 1, thermal moulds 2, 2.1 and heat-insulating 3 are connected, forming again the primary closed heat volume that will be placed again on rotating plates 13. But now in this volume a blank with dry components will be placed on the upper layer, and a melted one on the lower layer. The dry blank will be rapidly heated in the heat shock mode by acting counter-current heat fluxes from the heater above and from the melted body placed below, heated to 960°C, to the predetermined temperature, and melted. The next technological task is displacement of the lower blank, that gave a part of its heat, from the primary closed heat volume into the secondary one. To do this the platform 18 is moved upwards and the latter upon contacting with elements forming the heat volume, detaches lower thermal mould 2 with heat-insulating cap 3 from upper thermal mould 2.1, providing space for introduction of carriage 11 with the content. Carriage 11 is introduced into this space and the above-mentioned clamping device moves again reciprocally up-down. In result of this movement on rotating plates 13 of frame 6 the primary heat volume is formed again, in which cavity a blank at the stage of ending of melting its components is placed in the upper layer and the next blank at a primary stage of drying occupies the lower layer. On rotating supports 21 of the carriage the secondary closed heat volume is placed in which thermal mould 2 with a cooling article is located, closed from the above and from the bottom by heat-insulating caps 3, 4. Then the carriage 11 is rolled out of the modular installation to the stack-assembler. With help of the stack-assembler the closed thermal mould is taken off from carriage 11 to the stake arranged of similar closed thermal moulds of adjacent installations, forming together a line and serviced by mutual carriage 11. Then carriage 11 is displaced onto position of the stack-assembler and is completed by a similar set of technologic elements: a thermal mould with two heat-insulating caps under it. The obtained stuck of thermal moulds is directed to the articles cooling section where it is cooled during 3 hours. Then the stack is disconnected, articles are taken out, and the thermal moulds are filled again with blanks, gathered in a stack and transported into the position of stack-disassembler 32. The taken out articles have a polished face side and a relief rough back side for good fixation thereof on the surface of buildings.

Use of the invention allows to organize mass manufacturing of the finishing material, characterized by high production per a square unit, relatively low energy and, materials consumption and high productivity of labor.

## Claims

1. A method for decorative-facing slabs manufacturing, based on granule-powder glass-breakage, comprising laying blank components onto a bottom of a thermal mould, placing them in turn in a primary closed heat volume under a heater, melting the blank, introducing the next blank under the heater and cooling the melted blank outside the primary heat volume, **characterized in that** the blank in the primary closed heat volume is subjected to influence of gas-air flux of accumulated heat of the melted blank from below, thus a gas permeable porous or small-meshed material is used as a bottom of the thermal mould.

2. A modular installation for mass line production of decorative-facing slabs, based on granule-powder glass-breakage, comprising a frame with a base and a thermal cowl, placed on the frame, thermal moulds with upper heat-insulating caps, a carriage with supports for transportation of the thermal moulds under the thermal cowl, a device for clamping and a device for handing thermal moulds to the thermal cowl, **characterized in that** the thermal cowl is placed with possibility of lifting over the frame, a device of handing thermal moulds to the thermal cowl is mounted on the frame, each thermal mould has a lower heat-insulating cap, and the bottom of the thermal mould is made from a gas permeable porous or small-meshed material.
